(19) Europäisches Patentamt
European Patent Office
Office européen des brevets

(11) EP 3 562 141 A1

(12) **EUROPEAN PATENT APPLICATION**
published in accordance with Art. 153(4) EPC

(43) Date of publication:
**30.10.2019 Bulletin 2019/44**

(21) Application number: **17883475.0**

(22) Date of filing: **19.12.2017**

(51) Int Cl.:
**H04N 5/232** $^{(2006.01)}$

(86) International application number:
**PCT/JP2017/045524**

(87) International publication number:
**WO 2018/117099 (28.06.2018 Gazette 2018/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **20.12.2016 US 201662436467 P**

(71) Applicant: **The University of Tokyo
Bunkyo-ku
Tokyo 113-8654 (JP)**

(72) Inventors:
• **AIZAWA, Kiyoharu
Tokyo 113-8654 (JP)**
• **OGAWA, Masanori
Tokyo 113-8654 (JP)**

(74) Representative: **SR Huebner - Munich
Patentanwaltspartnerschaft mbB
Prinzregentenplatz 11
81675 München (DE)**

(54) **IMAGE PROCESSING DEVICE AND PROGRAM**

(57) Provided is an image processing apparatus which receives moving image data obtained while a camera is moved, estimates a camera movement trajectory, selects, from among points on the estimated camera movement trajectory, a plurality of points satisfying a pre-determined condition, and extracts, from the received moving image data, image data captured at the selected plurality of points. The image processing apparatus generates and outputs moving image data that have been reconfigured on the basis of the extracted image data.

FIG. 1

**Description**

Technical Field

The present disclosure relates to an image processing apparatus and a program.

Background Art

In recent years, "360° Video" has drawn an attention. Because the entirety of a space can be stored as a video, one can feel a greater sense of immersion and a greater sense of realism, compared to the conventional video. As a device for easily recording and replaying a 360° video has been provided, a service relating to the 360° video has appeared, and a market relating to virtual reality has expanded, the 360° video has become more and more important.
On the other hand, in the 360° video, hyperlapse and stabilization are expected in many cases, compared to the ordinary video. The hyperlapse refers to temporal sampling of a captured video to obtain a video of shorter time. In the cases such that a video itself is long and viewing the video in the original length is difficult, and that a video is uploaded to a service on a network, the length of the video must be made into a predetermined time period and the hyperlapse is required.
Further, stabilization refers to clarifying blurriness, etc., of an image, etc., caused when the image is captured. This is a conventionally recognized problem. However, since the sense of immersion is great in the 360° video, if the image has large blurriness, some viewers feel similar to motion sickness, and thus, stabilization is more strongly required compared to the conventional videos.

Prior Arts

Non-Patent Document

Non-Patent Document 1: Joshi, Neel et.al., Real-time hyperlapse creation via optimal frame selection, ACM Transactions on Graphics 34(4), pp. 63, August 2015

Summary

Non-Patent Document 1 discloses a conventional technology for handling these two problems, i. e., hyperlapse and stabilization, regarding conventional videos (not 360° videos). According to the method disclosed in Non-Patent Document 1, upon performing the stabilization, an inter-frame cost is obtained on the basis of the inter-frame homography transformation, etc., and frames evaluated as inappropriate are removed. Further, with respect to the selected frames, a process to crop the common part is performed.
However, the above-mentioned conventional technology cannot be applied to a wide-angle moving image such as a 360° video, etc., (here, the wide-angle moving image refers to an image captured to cover a range wider than the average visual field of the human eye, such as an image with a diagonal angle of view exceeding that of the standard lens, i.e., 46 degrees). The reasons therefor are: first, the inter-frame homography transformation is transformation between planar images; and a wide-angle video such as a 360° video, etc., cannot be obtained by performing partial cropping after the frame selection.
Therefore, there are drawbacks that such conventional technology cannot meet the requirement for hyperlapse and the requirement for stabilization regarding the wide-angle video such as a 360° video, etc.
The present disclosure has been made in view of the above, and one of the objectives is to provide an image processing apparatus and a program capable of meeting the requirement for hyperlapse and the requirement for stabilization regarding a wide-angle video such as a 360° video, etc.
In order to solve the drawbacks of the above conventional example, the present disclosure provides an image processing apparatus which receives and processes moving image data captured while a camera is moved, wherein the moving image data processing apparatus comprises a movement trajectory estimation device which estimates movement trajectory of the camera, a selection device which selects a plurality of points satisfying a predetermined condition, from among the points on the estimated camera movement trajectory, an extraction device which extracts data of images captured at the selected plurality of points, a generation device which generates reconfigured moving image data on the basis of the extracted image data, and an output device which outputs the reconfigured moving image data.
The requirement for hyperlapse and the requirement for stabilization can be met, regarding the wide-angle video such as a 360° video, etc.

Brief Explanation of Drawings

FIG. 1 is a block diagram showing a configuration example of an image processing apparatus according to an embodiment of the present disclosure.

FIG. 2 is a functional block diagram of an image processing apparatus according to an embodiment of the present disclosure.

FIG. 3 is an explanatory view showing an example of an outline of an image capturing path regarding moving image data to be processed by the image processing apparatus according to an embodiment of the present disclosure.

FIG. 4 is a flowchart showing an operation example of the image processing apparatus according to an embodiment of the present disclosure.

FIG. 5 is an explanatory view showing examples of evaluation values for the image processing apparatus according to an embodiment of the present disclosure.

Embodiment

An embodiment of the present disclosure will be explained with reference to the drawings. Unlike an ordinary image, in a 360° image, the image capturing range does not vary depending on the rotation of a camera. Thus, when the blurring of the camera is divided into positional blurring and rotational blurring, the rotational blurring can be completely restored if the amount of rotation is provided. In an ordinary video (a video other than the 360° video, hereinafter, referred to as a non-360° video), neither of the blurrings can be restored, and thus, the degree of the blurring is obtained as a cost. However, in the 360° video, it is considered that only the positional blurring should be treated as a cost of camera motion.

When a 360° video and a desired sampling rate are provided, a method for outputting a stabilized 360° video, while satisfying the sampling rate to a certain extent, is as follows.

When v represents a transition cost from the i-th frame to the j-th frame among a plurality of frames (360° images) included in a 360° video, and the frame selected before the i-th frame is defined as h-th frame, the cost can be represented by the following formula (1).

$$C(h, i, j, v) = C_m(i, j) + \lambda_s C_s(i, j, v) + \lambda_a C_a(h, i, j) \qquad (1)$$

Here, $C_m$ represents a cost by camera motion, $C_S$ represents a cost for violating the provided velocity magnification constraint, and $C_a$ represents a cost for the velocity change. $\lambda_S$ and $\lambda_a$ represent coefficients for providing weights to respective costs. For Cs and $C_a$, definitions are the same as those of the conventional method, because the difference of video type has no influence thereon. On the other hand, for $C_m$, according to the conventional method, a moving amount of the center is calculated on the basis of the inter-frame homography transformation, and the size of the moving amount is treated as a cost, whereas according to the present embodiment, a motion cost using the three-dimensional camera position is used. Specifically, the motion cost is defined as below.

$$C_m(i, j) = \|(\mathbf{X}_j - \mathbf{X}_i) \times \frac{\mathbf{X}'_j - \mathbf{X}'_i}{\|\mathbf{X}'_j - \mathbf{X}'_i\|_2}\|_2 \qquad (2)$$

Here, the vector $X_k$ represents a three-dimensional position coordinate of the camera when the k-th frame is captured, the vector $X'_k$ represents a three-dimensional position coordinate of an expected position of the camera (preferable camera position), and $\|x\|_2$ represents Euclidean norm of x.

The preferable camera position can be calculated by a method of such as applying Gaussian smoothing to an actual camera position. $C_m$ obtained by the formula (2) represents the moving amount of the camera in a direction perpendicular to the ideal direction, which is a cost expressing the positional blurring of the camera.

Next, on the basis of the defined inter-frame cost, a frame path (movement trajectory of the camera at the time of image capturing) is selected by a predetermined method such as Dynamic Programming, so that the selected frame path has the minimum total cost. Thereby, a frame is selected so that, with the selected frame, the camera position becomes smooth while the sampling rate is maintained at a value similar to the provided value.

The frame selection is performed to reduce the positional blurring, but the rotation state of the camera at the time of image capturing is not considered. Therefore, in the present embodiment, a known rotation removing process is performed to the 360° video as a post treatment. An example of the rotation removing process is disclosed in Pathak, Sarthak, et.al., A decoupled virtual camera using spherical optical flow, Image Processing (IPCP), 2016 IEEE International Conference on pp.4488-4492 (September 2016). In this method, the moment of the optical flow of the 360° video is minimized, to thereby minimize the inter-frame rotation. In the present embodiment, the post treatment is changed from cropping to rotation removing, so as to be applicable to 360° videos.

[Configuration]

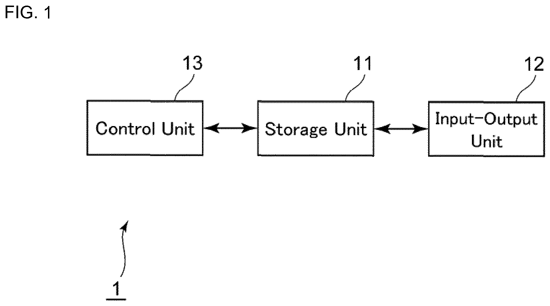

As exemplified in FIG. 1, an image processing apparatus 1 according to an embodiment of the present disclosure comprises a control unit 11, a storage unit 12, and an input-output unit 13. Here, the control unit 11 is a program controlled device such as a CPU, etc. According to the present embodiment, the control unit 11 executes a program stored in the storage unit 12. According to the present embodiment, the control unit 11 receives moving image data captured while a camera is moved, estimates a movement trajectory of the camera, and selects a plurality of points satisfying a predetermined condition from among the points on the estimated camera movement trajectory. The control unit 11 extracts data of images captured at the selected plurality of points from the received moving image data, and generates reconfigured moving image data using the extracted image data. Then, the control unit 11 outputs the generated reconfigured moving image data. The processes of the control unit 11 will be described in detail below.

The storage unit 12 is a memory device, etc., and stores a program executed by the control unit 11. The program may be provided by being stored in a computer-readable non-transitory storage medium, and may be installed to the storage unit 12. Further, the storage unit 12 may also operates as a work memory of the control unit 11. The input-output unit 13 is, for example, a serial interface, etc., which receives 360° video data to be processed from the camera, stores the received data in the storage unit 12 as data to be processed, and provides the data so as to be processed by the control unit 11.

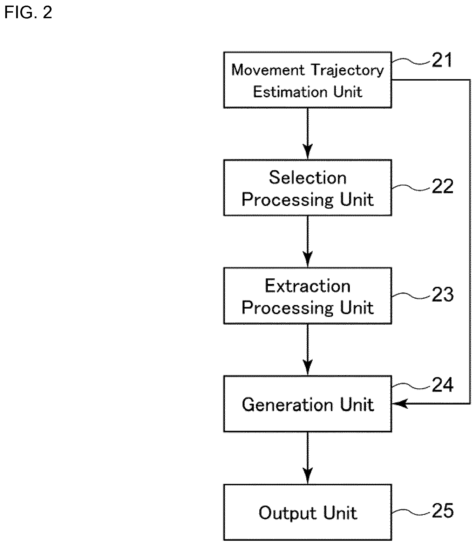

Operations of the control unit 11 according to the present embodiment will be explained. As exemplified in FIG. 2, the control unit 11 according to the present embodiment functionally comprises a movement trajectory estimation unit 21, a selection processing unit 22, an extraction processing unit 23, a generation unit 24, and an output unit 25. The moving image data to be processed by the control unit 11 according to the present embodiment is moving image data of a 360° video captured by a camera such as Theta (registered trademark) of Richo Co., Ltd.

The movement trajectory estimation unit 21 estimates a movement trajectory of a camera when the 360° video to be processed is captured. The movement trajectory estimation unit 21 projects the 360° video onto the inner faces of a hexahedral projection plane with its center at the position of the camera, and a planar image projected on the inner face corresponding to the moving direction of the camera (mentioned below), among the inner faces of the hexahedron, is used. According to a process described in, for example, ORB-SLAM (Mur-Artal, Raul, J. M. M. Montiel, and Juan D. Tardos. Orb-slam: a versatile and accurate monocular slam system, IEEE Transactions on Robotics 31.5 (2015): 1147-1163), a camera position coordinate (three-dimensional position coordinate) and a camera posture (a vector representing a direction from the camera position toward the center of the angle of view) are obtained for each of the frames expressing the estimation result of the movement trajectory of the camera. The movement trajectory estimation unit 21 outputs the obtained camera posture information to the generation unit 24.

For example, when a 360° video is captured by a camera having a pair of image capturing elements arranged on the front side and the rear side of the camera body, the three-dimensional position coordinate can be described as a coordinate value in a three-dimensional space of the XYZ orthogonal coordinate system, wherein the origin is a position of the camera at the start of the image capturing, the Z-axis is the moving direction of the camera which is the direction of the center of the image capturing element at the start of the image capturing, the X-axis is in a direction parallel with the floor, and is in the plane of which the normal line is the Z-axis (the plane being one of the faces of the hexahedron, i.e., the projection plane to which ORB-SLAM is applied), and the Y-axis is in the direction perpendicular to X-axis and Z-axis, respectively. The coordinate value of each point on the movement trajectory of the camera may be estimated by a method other than the above-mentioned ORB-SLAM method.

The selection processing unit 22 selects a plurality of points satisfying a predetermined condition from among the points on the estimated camera movement trajectory, using the camera position coordinate information for each frame output from the movement trajectory estimation unit 21. Hereinbelow, $X_i$ (here, X represents a vector value) represents a camera position coordinate when the i-th frame (hereinbelow, the "i" is referred to as a frame number) is captured, and the vector $X'_k$ represents a preferable three-dimensional position coordinate of the camera.

According to an example of the present embodiment, the selection processing unit 22 selects frames on the basis of a condition relating to the information of the point position at which each frame is captured (camera position coordinate $X_i (i=1, 2, 3...)$ at the time of image capturing), and a condition relating to the information of the image capturing time at the relevant point.

Specifically, the selection processing unit 22 obtains a preferable three-dimensional position coordinate $X'_k$ of

the camera at the k-th frame (k=1, 2, 3...), on the basis of the position coordinate $X_i$(i=1, 2, 3...) of the camera when each frame is captured.

As an example, the selection processing unit 22 calculates a preferable three-dimensional position coordinate $X'_k$ of the camera by a method, for example, applying a smoothing process such as Gaussian smoothing to the values (data series) of the position coordinate $X_i$(i=1, 2, 3...). Here, the smoothing method may be Gaussian smoothing or any other widely known methods such as obtaining a moving average, etc.

The selection processing unit 22 receives an input of a designated velocity magnification v from a user, and calculates the transition cost from the i-th frame to the j-th frame as follows, using the velocity magnification v. Namely, provided that the frame selected before the i-th frame is the h-th frame, the selection processing unit 22 calculates the transition cost from the i-th frame to the j-th frame by the formula (1).

In the formula (1), $C_m$ is a motion cost as represented by the formula (2). Cs is a speed cost as represented by the formula (3).

$$C_S(i, j, v) = \min \left( \|(j - i) - v\|_2^2, \tau_S \right) \qquad (3)$$

In the formula, i and j each represents a frame number, v represents a velocity magnification, $\tau_S$ represents the maximum value of the speed cost, which is previously determined, and min(a, b) refers to taking smaller value between a and b (the same hereinafter).

$C_a$ is an acceleration cost as represented by the formula (4).

$$C_a(h, i, j) = \min \left( \|(j - i) - (i - h)\|_2^2, \tau_a \right) \qquad (4)$$

In the formula, i, j, and h each represents a frame number, and $\tau_a$ represents the maximum value of the acceleration cost, which is previously determined. Here, the speed cost and the acceleration cost correspond to the conditions relating to the capturing time information of each frame (such as a difference from the frame number which is supposed to be extracted on the basis of the designated velocity magnification, and the like).

The selection processing unit 22 selects a frame to be extracted, using the obtained transition cost sequence from the i-th frame to the j-th frame. Specifically, when a frame is selected as a frame to be extracted, from a series of frames p, and the frame (n=1, 2, ..., N) which is n-frame after the selected frame, has the frame number t in the entirety of the moving image data to be processed, this is represented as p(n)=t. In the moving image data to be processed, the total cost with the designated velocity magnification v is represented by the formula (5).

$$\phi(p, v) = \sum_{n=1}^{N} C(p(n - 1), p(n), p(n + 1), v) \qquad (5)$$

Then, the selection processing unit 22 uses the formula (5), and obtains the frame series of the formula (6).

$$p_v = \arg \min_p \phi(p, v) \qquad (6)$$

As for this frame selection method based on the cost, Dynamic Programming may be used, similar to the method in Non-Patent Document 1. Thus, detailed explanation therefor is omitted here.

The extraction processing unit 23 extracts the frames selected by the selection processing unit 22, from the moving image data to be processed. Namely, the extraction processing unit 23 extracts, from the received moving image data, image data of the frames captured at a plurality of points, which are selected by the selection processing unit 22 so as to be close to the ideal positions, and so as not to largely violate the velocity magnification constraint.

The generation unit 24 generates timelapse moving image data by arranging (reconfiguring) the image data extracted by the extraction processing unit 23 in the order of extraction (in the ascending order of the frame number in the moving image data to be processed). Further, with respect to each piece of the image data extracted by the extraction processing unit 23, the generation unit 24 may estimate the camera posture when the relevant image data is captured, modify the image data on the basis of the information of the estimated posture, and generate reconfigured moving image data using the modified image data.

Specifically, the generation unit 24 receives information representing the camera posture (vector representing a direction from the camera position toward the center of the angle of view) from the movement trajectory estimation unit 21. When the i-th frame is extracted from the moving image data to be processed, and the frame number j is the next greater frame number of i, the image of the i-th frame is modified so that the center of the i-th frame image is located in the direction of the movement vector $(X_j-X_i)$ from the i-th frame to the j-th frame. Namely, using the vector V toward the center of the angle of view represented by the information of the camera posture when the i-th frame was actually captured, and the above-mentioned movement vector $(X_j-X_i)$, the three-dimensional rotational correction, by the difference $(X_j-X_i)$-V, is applied to the extracted i-th frame image. The rotational correction process is widely known, and the detailed explanation therefor is omitted here.

According to an example of the present embodiment, the moving image data does not have to be a 360° image, but may be an image of comparatively wide-angle. If this is the case, after the rotational correction process, the finally output angle of view size (which can be previously designated) may include the image-uncaptured range. In this case, the image data may be cropped so that the image-uncaptured range is not included and the image data is output with the cropped angle of view, or the image-uncaptured range may be set to be pixels of a predetermined color (for example, black), which is subjected to the subsequent process.

The output unit 25 outputs the moving image data generated by the generation unit 24 through reconfiguration, to a display, etc. The output unit 25 externally transmits the generated moving image data through a network, etc.

[Operation]

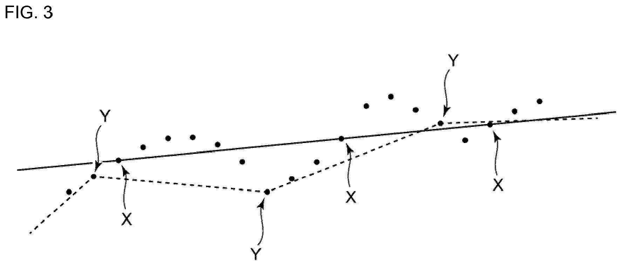

The present embodiment has the above structure, and operates as follows. In the following example, the input moving image data to be processed is moving image data captured while the camera is moved along a path (for example, moving image data captured during walking), the outline the path being two-dimensionally shown in FIG. 3. Further, an instruction relating to the velocity magnification v is input from a user. The instruction relating to the velocity magnification does not have to be directly input. For example, an image processing apparatus 1 can receive, from a user, information relating to the upper limit of the playback time of the moving image data to be output, and determine the number of selected points (number of frames) on the basis of the ratio between the playback time of the actually captured moving image data to be processed and the input upper limit of the playback time.

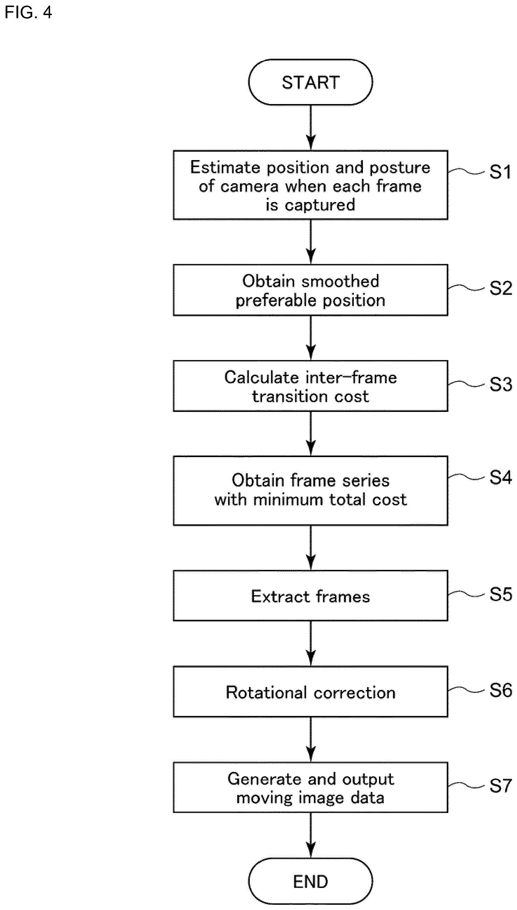

Using the moving image data (here, 360° video) captured along the above-mentioned path as moving image data to be processed, the image processing apparatus 1 processes the moving image data by ORB-SLAM, etc., and obtains a camera position coordinate (three-dimensional position coordinate), and a camera posture (a vector representing a direction from the camera position toward the center of the angle of view) for each of the frames representing the estimation result of the camera movement trajectory, as exemplified in FIG. 4 (S1).

Then, the image processing apparatus 1 uses the information of the camera position coordinate obtained for each frame to select plurality of points which satisfy a predetermined condition, from the points on the estimated camera movement trajectory. In this example, first, the image processing apparatus 1 performs Gaussian smoothing to the position coordinate Xi(i=1, 2, 3...) of the camera when each frame was captured, and obtains a preferable three-dimensional position coordinate $X'_k$ of the camera at the k-th frame (k=1, 2, 3...) (S2).

Then, using the information of velocity magnification v received from a user, the image processing apparatus calculates the transition cost from the i-th frame to the j-th frame, by the formula (1). For the formula (1), the motion cost $C_m$ representing the deviation amount in the translational direction from the preferable camera apposition obtained as a preferable path, the speed cost Cs reflecting the deviation from the frame which is supposed to be selected based on the velocity magnification, and the acceleration cost $C_a$, are obtained from the formula (2) to formula (4) (S3).

The image processing apparatus 1 selects a frame combination (frame series) having the minimum transition cost in total, from possible combinations of the frames to be selected, regards the frames included in the obtained frame series as selected frames, and obtains frame number information specifying the selected frames (for example, frames indicated as (X) in FIG. 3 are selected)(S4).

The image processing apparatus 1 extracts the frames specified by the frame numbers obtained in the above process, from the frames included in the moving image data to be processed (S5). Then, with respect to the image data of each extracted frame, the image processing apparatus 1 applies the three-dimensional rotational correction, using the information expressing the camera posture (a vector representing a direction from the camera position toward the center of the angle of view) (S6), so that the moving direction (here, the transition direction between the selected frames) matches the direction toward the center of the angle of view.

The image processing apparatus 1 arranges the pieces of the image data after the correction in ascending order of the frame number, and generates and outputs the reconfigured moving image data (S7).

According to the present embodiment, for example, if frames are selected from the 20 frames shown in FIG. 3 in accordance with the conventionally designated velocity magnification (for example, eight times), frames are selected at a constant interval (in this case, every 7 frames). Thus, the frames indicated as (Y) in FIG. 3 are selected, and as shown by the dotted line in FIG. 3, the translational movement path is largely deviated at each of the selected points (namely, the selected points are not arranged approximately linearly).

On the other hand, according to an example of the present embodiment, frames which are comparatively close to the result of the smoothing process obtained on the basis of the image capturing positions of the frames, are selected. Therefore, the intervals between the image capturing times of the selected frames are not always constant, and, for example, the frames indicated as (X) in FIG. 3 are selected. In this case, as shown by the solid line in FIG. 3, the translational movement paths of the camera when the selected frames are captured are arranged approximately linearly.

As described above, according to the present embodiment, with respect to a wide-angle video such as a 360° video, etc., the requirements for hyperlapse and the requirements for stabilization can be met at the same time.

[Modified Example]

In the above explanation of the present embodiment, the position and the posture of the camera when each frame in the moving image data to be processed is captured, are estimated using the captured image data, such as ORB-SLAM, etc. However, the present embodiment is not limited thereto. For example, if the camera has a built-in gyroscope or GPS, or if information from a position recording apparatus which moves together with the image processing apparatus 1 can be obtained, the image processing apparatus 1 can receive the input of the information measured and recorded by the gyroscope or GPS, or the information recorded by the position recording apparatus, and obtain the position or posture of the camera when each frame is captured, by using the input information.

In the above example of the present embodiment, the moving image data to be processed is received from the camera connected to the input-output unit 13. However, the camera itself can function as an image processing apparatus 1. In this case, the CPU, etc., provided in the camera functions as a control unit 11, and above processes are executed to the moving image data captured by itself.

[Example of Evaluation]

Using the image processing apparatus 1 according to the present embodiment, actually captured moving image data was processed, and evaluation of the results are shown below. In the following evaluation, an amount showing the size of oscillation caused by the camera movement is obtained.

$$S = \sum_{i=1}^{N-2} |\mathbf{x}_{i+1} - \mathbf{x}_i| \sin \frac{\theta_i}{2} \qquad (7)$$

In the formula (7), $x_i$ (i=1, 2, ...) represents the camera position coordinate at the i-th frame included in the moving image data to be output, and the angle $\theta_i$ between the vector from $x_i$-1 to $x_i$ and the vector from $x_i$ to $x_i$+1 is represented as below.

$$\theta_i = \arccos \left( \frac{(\mathbf{x}_{i+1} - \mathbf{x}_i) \cdot (\mathbf{x}_i - \mathbf{x}_{i-1})}{|\mathbf{x}_{i+1} - \mathbf{x}_i| |\mathbf{x}_i - \mathbf{x}_{i-1}|} \right)$$

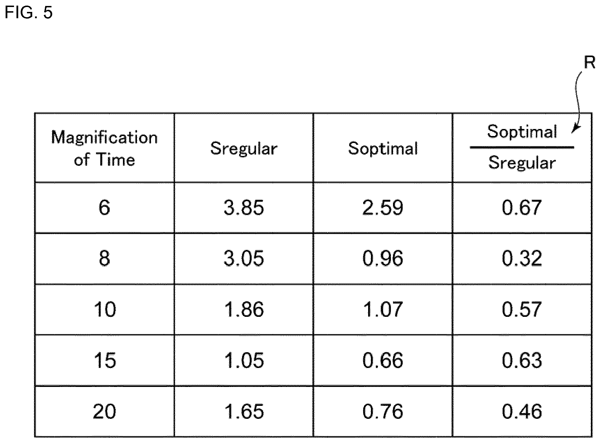

FIG. 5 is an explanatory view showing, at a plurality of velocity magnifications, the evaluation value S($S_{regular}$) when frames are selected at constant intervals in time, the evaluation value S($S_{optimal}$) for the frames selected by the image processing apparatus 1 according to the present embodiment, and the ratio (R) therebetween.

As exemplified in FIG. 5, according to the present embodiment, the size of oscillation can be suppressed and the stabilization is achieved at any of the velocity magnifications, compared to the cases that the frames were selected at constant intervals.

Explanation on Numerals

1 Image Processing Apparatus, 11 Control Unit, 12 Storage Unit, 13 Input-Output Unit, 21 Movement Trajectory Estimation Unit, 22 Selection Processing Unit, 23 Extraction Processing Unit, 24 Generation Unit, 25 Output Unit

**EP 3 562 141 A1**

**Claims**

1. An image processing apparatus which receives and processes moving image data captured while a camera is moved, wherein the image processing apparatus comprises:

   a movement trajectory estimation device which estimates a movement trajectory of the camera,
   a selection device which selects, from among points on the estimated camera movement trajectory, a plurality of points satisfying a predetermined condition,
   an extraction device which extracts, from the received moving image data, image data captured at the selected plurality of points,
   a generation device which generates moving image data reconfigured on the basis of the extracted image data, and
   an output device which outputs the generated reconfigured moving image data.

2. The image processing apparatus according to claim 1, wherein the generation device estimates, with respect to each piece of the extracted image data, a posture of the camera when the image data is captured, modifies the image data on the basis of information of the estimated posture, and generates moving image data reconfigured by using the modified image data.

3. The image processing apparatus according to claim 1 or claim 2, wherein
   the predetermined condition used when the selection device selects the plurality of points from the points on the estimated camera movement trajectory comprises,
   a condition relating to position information at each point, and
   a condition relating to image capturing time information at each point.

4. The image processing apparatus according to any one of claims 1 to 3, wherein
   the selection device receives information regarding the upper limit of playback time of the moving image data to be output, and determines the number of selected points.

5. A program by which a computer functions as.
   A device which receives moving image data captured while a camera is moved,
   a movement trajectory estimation device which estimates a movement trajectory of the camera,
   a selection device which selects, from among points on the estimated camera movement trajectory, a plurality of points satisfying a predetermined condition,
   an extraction device which extracts, from the received moving image data, image data captured at the selected plurality of points,
   a generation device which generates moving image data reconfigured on the basis of the extracted image data, and
   an output device which outputs the generated reconfigured moving image data.

FIG. 1

```
        13                    11                      12
┌──────────────┐      ┌──────────────┐      ┌──────────────┐
│ Control Unit │◄────►│ Storage Unit │◄────►│ Input-Output │
│              │      │              │      │     Unit     │
└──────────────┘      └──────────────┘      └──────────────┘
```

1

FIG. 2

```
┌─────────────────────┐
│ Movement Trajectory │ ～21
│   Estimation Unit   │
└─────────────────────┘
           │
           ▼
┌─────────────────────┐
│     Selection       │ ～22
│  Processing Unit    │
└─────────────────────┘
           │
           ▼
┌─────────────────────┐
│     Extraction      │ ～23
│  Processing Unit    │
└─────────────────────┘
           │
           ▼
┌─────────────────────┐ ～24
│   Generation Unit   │◄───────┐
└─────────────────────┘        │
           │                   │
           ▼                   │
┌─────────────────────┐        │
│     Output Unit     │ ～25    │
└─────────────────────┘        │
```

FIG. 3

FIG. 4

```
        ┌─────────┐
        │  START  │
        └────┬────┘
             │
             ▼
  ┌─────────────────────────┐
  │ Estimate position and   │
  │ posture of camera when  │ ~ S1
  │ each frame is captured  │
  └───────────┬─────────────┘
              │
              ▼
  ┌─────────────────────────┐
  │    Obtain smoothed      │ ~ S2
  │   preferable position   │
  └───────────┬─────────────┘
              │
              ▼
  ┌─────────────────────────┐
  │   Calculate inter-frame │ ~ S3
  │     transition cost     │
  └───────────┬─────────────┘
              │
              ▼
  ┌─────────────────────────┐
  │    Obtain frame series  │ ~ S4
  │   with minimum total cost│
  └───────────┬─────────────┘
              │
              ▼
  ┌─────────────────────────┐
  │      Extract frames     │ ~ S5
  └───────────┬─────────────┘
              │
              ▼
  ┌─────────────────────────┐
  │   Rotational correction │ ~ S6
  └───────────┬─────────────┘
              │
              ▼
  ┌─────────────────────────┐
  │   Generate and output   │ ~ S7
  │    moving image data    │
  └───────────┬─────────────┘
              │
              ▼
        ┌─────────┐
        │   END   │
        └─────────┘
```

FIG. 5

R

| Magnification of Time | Sregular | Soptimal | $\dfrac{\text{Soptimal}}{\text{Sregular}}$ |
|:---:|:---:|:---:|:---:|
| 6 | 3.85 | 2.59 | 0.67 |
| 8 | 3.05 | 0.96 | 0.32 |
| 10 | 1.86 | 1.07 | 0.57 |
| 15 | 1.05 | 0.66 | 0.63 |
| 20 | 1.65 | 0.76 | 0.46 |

## INTERNATIONAL SEARCH REPORT

| International application No. |
|---|
| PCT/JP2017/045524 |

**A. CLASSIFICATION OF SUBJECT MATTER**
Int.Cl. H04N5/232(2006.01)i

According to International Patent Classification (IPC) or to both national classification and IPC

**B. FIELDS SEARCHED**

Minimum documentation searched (classification system followed by classification symbols)
Int.Cl. H04N5/232

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | US 2016/0330399 A1 (MICROSOFT TECHNOLOGY LICENSING, LLC) 10 November 2016, paragraphs [0017]-[0018], [0024]-[0026], [0029], [0033], [0041]-[0050], [0053]-[0055], [0057]-[0058], [0065]-[0070], fig. 1, 5 & WO 2016/182646 A1 | 1, 3, 5<br>4<br>2 |
| Y | JP 2005-204003 A (NIPPON TELEGRAPH AND TELEPHONE CORP.) 28 July 2005, paragraphs [0044]-[0050] (Family: none) | 4 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2017/045524 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-100065 A (CANON INC.) 28 May 2015, paragraphs [0151]-[0181], [0184]-[0185] (Family: none) | 2 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOSHI, NEEL.** Real-time hyperlapse creation via optimal frame selection. *ACM Transactions on Graphics,* August 2015, vol. 34 (4), 63
- **PATHAK, SARTHAK.** A decoupled virtual camera using spherical optical flow. *Image Processing (IPCP), 2016 IEEE International Conference,* September 2016, 4488-4492

- **MUR-ARTAL ; RAUL, J. M. M. MONTIEL ; JUAN D. TARDOS.** Orb-slam: a versatile and accurate monocular slam system. *IEEE Transactions on Robotics,* 2015, vol. 31.5, 1147-1163